# DEMANDE DE BREVET EUROPEEN

(11) **EP 1 788 357 A1**
(43) Date de publication de la demande: **23.05.2007**
(21) Numéro de dépôt: 05300932.0
(22) Date de dépôt: 16.11.2005
(51) Int. Cl.: G01C 22/00, G01S 5/02

(54) **Système de localisation d'utilisateur pieton**

(71) Demandeur: Alcatel Lucent, 75008 Paris (FR)
(72) Inventeur: Oster, Yann ALCATEL ALENIA SPACE TOULOUSE, 31037 Toulouse Cedex 01 (FR)
(74) Mandataire: Hedarchet, Stéphane

(57) **Abrégé**

L'invention se rapporte à un système de localisation d'utilisateur(s) piéton(s) (16) se déplaçant dans une zone de couverture définie au préalable (10), la zone de couverture (10) comportant des points de repère physiques de position connue (12, 14), et le système comprenant :
- au moins un terminal (18), destiné à être porté par 1(es) utilisateur(s) piéton(s) (16), comportant des capteurs pour mesurer des paramètres afférents aux déplacements de l'utilisateur (16),
- des moyens pour réaliser une estimation de position de l'utilisateur (16) à partir des points de repère physiques (12,14) et des mesures réalisées par les capteurs, cette estimation étant utilisée sans faire appel à la détection de signaux émis par un satellite, et
- au moins un serveur distant (22) comprenant des moyens (24) pour répertorier les points de repère physiques.

## Description

La présente invention concerne un système de localisation d'utilisateur piéton se trouvant dans une zone de couverture préalablement définie. Cette invention est notamment destinée à être utilisée dans des environnements structurés tels qu'en ville, dans des usines, ou dans des bâtiments. Cette invention met en oeuvre le principe d'intelligence ambiante, exploitant la collaboration de l'environnement et des utilisateurs.

Il est connu, pour localiser des utilisateurs piétons, des véhicules ou toute autre sorte d'objet, d'utiliser un système de navigation appelé GNSS (Global Navigation Satellite System). Dans ce système, des satellites GNSS envoient en permanence des signaux vers la Terre. Des récepteurs GNSS portés par un utilisateur ou un véhicule captent ces signaux et en déduisent la distance qui les sépare du satellite. Chaque point de la Terre étant généralement couvert par au moins quatre satellites, le récepteur calcule quatre distances au minimum, et peut en déduire sa position exacte. Si un point n'est couvert que par trois satellites, l'utilisateur peut malgré tout déterminer sa position exacte en utilisant sa connaissance d'un paramètre parmi les trois coordonnées spatiales et le temps.

L'invention part de la constatation que l'acquisition des signaux GNSS est souvent compromise en ville comme à l'intérieur des bâtiments, du fait notamment de l'atténuation du signal par la structure des constructions et des multi trajets qui peuvent créer des interférences.

Des solutions ont été proposées pour pallier à ce problème. Une première solution consiste à utiliser des balises locales, appelées pseudolites, en complément des satellites. Ainsi, ces balises génèrent un signal similaire à ceux des satellites et permettent d'augmenter la puissance du signal reçu, mais sans toutefois résoudre le problème des interférences dues aux multi trajets Par ailleurs, les balises de ce type sont relativement onéreuses, et leur nombre doit être limité dans un voisinage, compte tenu des ressources limitées en forme d'onde réservées par le GNSS (par exemple, le GPS ne prévoit que 4 formes d'ondes pour les pseudolites). En pratique, ces balises sont surtout utilisées en extérieur, en complément du système GNSS.

Une deuxième solution connue consiste à déployer des réseaux locaux tels que des réseaux radiofréquence. Ces réseaux comportent plusieurs bornes émettant des signaux. On peut alors, avec un récepteur, détecter les différents signaux et mesurer leur puissance, puis corréler ces résultats avec une cartographie pour identifier la position du récepteur. Cette solution est toutefois relativement contraignante en terme de déploiement et de configuration, et la précision des mesures obtenues est fortement variable du fait de la sensibilité aux réflexions des signaux sur l'environnement mobilier et humain.

Une troisième solution consiste à utiliser un réseau local radiofréquence à ultra large bande. Dans cette solution, la localisation est basée sur les mêmes procédés que la localisation par système GNSS. L'inconvénient est que l'implantation d'un tel réseau est très contraignante. Par ailleurs, dans un tel réseau, la totalité de la bande passante est dédiée à la localisation, et le réseau ne peut donc pas être utilisé pour d'autres applications, ce qui le rend très onéreux par rapport à l'utilisation qui peut en être faite.

L'invention proposée ici vise à remédier à au moins l'un de ces inconvénients.

L'invention concerne un système de localisation d'utilisateur(s) piéton(s) se déplaçant dans une zone de couverture définie au préalable, la zone de couverture comportant des points de repère physiques de position connue, et le système comprenant :
- au moins un terminal, porté par l(es) utilisateur(s) piéton(s), comportant des capteurs pour mesurer des paramètres afférents aux déplacements de l'utilisateur,
- des moyens pour réaliser une estimation de position de l'utilisateur à partir des points de repère physiques et des mesures réalisées par les capteurs, cette estimation étant effectuée sans faire appel à la détection de signaux émis par un satellite, et
- au moins un serveur distant comprenant des moyens pour répertorier les points de repère physique.

Les moyens pour réaliser l'estimation de position peuvent se trouver dans le terminal ou bien dans un serveur. Selon la configuration choisie, il pourra être utile de disposer par ailleurs d'un moyen de communication bidirectionnel permettant aux terminaux et aux serveurs d'échanger des informations. Les terminaux et les serveurs peuvent ainsi communiquer régulièrement pour échanger des estimations de positions, ou des positions sûres.

La zone de couverture correspond aux lieux sur lesquels on désire localiser les piétons. En pratique, la zone de couverture peut être un ensemble de sous zones non contiguës, puisque par exemple un certain nombre de bâtiments peuvent être couverts. Dans ce cas, pour que la localisation soit possible, il est utile de connaître au préalable une zone de couverture prédéfinie, c'est-à-dire la sous zone dans laquelle se trouve le piéton. Les différents points de repère physiques de la zone sont par exemple répertoriés sur une cartographie archivée dans le serveur. De cette façon, le serveur connaît les positions géographiques de tous les points de repère physiques.

Dans une réalisation de l'invention, le système comprend une pluralité de bornes de positionnement installées sur la zone de couverture, représentant des points de repère physiques. Dans une réalisation, chacune de ces bornes de positionnement émet un signal caractéristique de son identité et/ou de sa proximité ou distance. Ces signaux d'identification peuvent par exemple permettre à un serveur, disposant d'une base de données contenant les positions des différentes bornes, d'identifier la position du terminal en connaissant la borne près de laquelle il se trouve.

La zone est alors équipée de bornes de positionnement, en fonction de la surface et de la densité en contraintes de trajectoires du fait de l'environnement, lorsque l'on utilise du map matching.

Les bornes de positionnement à détection de proximité peuvent être implantées avec différentes technologies, telles que :
- la mesure de puissance radiofréquence rayonnée par le terminal utilisateur, dont la détection du pic peut être comparée à un seuil pour en estimer la proximité, qui est ensuite communiquée au terminal par un signal électromagnétique, sonore ou infrarouge,
- des champs magnétiques produits par des aimants ou des boucles d'induction,
- des transmetteurs à infrarouge ou à ultrasons,
- des transmetteurs de type RFID, ou encore
- des appareils de contrôle de présence ou de passage.

Les bornes de positionnement à détection de distance peuvent être implantées avec différentes technologies, telles que :
- des transmetteurs à ultrasons, émettant un signal en synchronisation avec une référence de temps partagée par la borne et le terminal (synchronisation préalable de l'horloge du terminal sur l'horloge système, ou synchronisation instantanée sur l'horloge locale de la borne diffusée par radiofréquence).

La faible puissance des émissions radiofréquence et ultrasonore permet d'utiliser plusieurs bornes en voisinage sans risque d'interférences.

Lorsque le terminal utilisateur détecte le signal d'une borne de positionnement identifiée, cela lui permet de connaître sa position avec une bonne précision (de l'ordre du mètre) et de façon sûre.

Dans une autre réalisation, lorsque le terminal détecte le signal d'une borne dont la position n'est pas identifiée, cela détermine un certain nombre de positions possibles donnant lieu à différentes trajectoires. Le choix de la «bonne» trajectoire est réalisé ultérieurement en utilisant un algorithme de maximum de vraisemblance.

Ainsi, dans une réalisation, le terminal comporte des moyens pour détecter la proximité immédiate d'une borne, ou la distance à une borne, et ainsi identifier une position sûre de l'utilisateur et/ou une position candidate avec une probabilité déterminée. Le type de position, sûre ou candidate, dépend du type de borne utilisé.

Dans une réalisation, le terminal comporte en outre des moyens pour transmettre cette position sûre et/ou probable à un serveur distant.

Le serveur dispose d'une base de données dans laquelle il peut conserver les dernières positions sûres de tous les terminaux utilisateurs du système. En règle générale, le terminal transmet, en même temps que sa position, des données data horaires, permettant d'identifier le moment où cette position sûre a été repérée.

Toutefois, si l'utilisateur se trouve dans un environnement très structuré imposant de nombreuses contraintes sur les déplacements, il n'est pas nécessaire d'utiliser des bornes de positionnement. Dans ce cas, le terminal et/ou le serveur comporte(nt) des moyens pour identifier les points de repère physiques à partir d'une cartographie de la zone de couverture. Ces points de repère, appelés dans ce cas points singuliers, peuvent par exemple être des escaliers, un ascenseur, ou bien encore une porte. Dans une réalisation, le terminal et/ou le serveur comporte(nt) des moyens de présomption de passage à proximité d'un point de repère physique de la zone de couverture, notamment des moyens de corrélation avec une cartographie de l'environnement. En effet, le terminal réalise une estimation de trajectoire et, connaissant la configuration de l'environnement dans lequel évolue l'utilisateur, peut comparer cette estimation avec les trajectoires possibles. De cette façon, il peut identifier le passage à certains endroits singuliers.

Il existe plusieurs moyens pour réaliser une estimation de position.

Dans une réalisation, le dispositif d'estimation de position utilise une combinaison de capteurs inertiels (accéléromètres et gyromètres) ainsi qu'une unité de calcul qui implémente les équations du mouvement, liant les accélérations et vitesses angulaires perçues par le mobile à la position dans un repère de navigation.

Dans une autre réalisation en général plus performante pour un piéton, le dispositif d'estimation de position combine une fonction pédomètre estimant la distance curviligne parcourue, et une fonction estimant le cap suivi. Le déplacement relatif instantané entre deux époques élémentaires s'obtient par conversion des coordonnées polaires en coordonnées cartésiennes de la distance curviligne et du cap suivi. Le déplacement relatif s'obtient alors par intégration numérique. Un tel dispositif réalise une estimation de trajectoire dite « en aveugle ».

Le pédomètre compte les pas détectés par leur signature inertielle, et intègre le nombre de pas avec une pondération par la longueur du pas.

Ainsi, dans une réalisation, le terminal et/ou le serveur comprennent des moyens pour mémoriser une longueur de pas de référence de l'utilisateur.

Dans une réalisation, les capteurs intégrés dans le terminal comprennent des capteurs, notamment de type capteurs inertiels, pour détecter les pas et pour mesurer les changements de directions de l'utilisateur, le terminal comportant en outre :
- des moyens pour estimer la distance parcourue à partir du nombre de pas et de la longueur de pas de référence de l'utilisateur, notamment un pédomètre,
- des moyens pour estimer le cap suivi, à partir des changements de direction mesurés,
- et des moyens pour convertir les estimations réalisées par ces deux moyens en estimation de trajectoire.

Les moyens pour calculer le cap suivi peuvent par exemple utiliser une centrale inertielle comprenant un calculateur intégrant les équations du mouvement.

Dans une réalisation, le terminal est équipé d'une centrale inertielle six axes à base de MEMS.

Dans une autre réalisation, le terminal est équipé d'une centrale inertielle ainsi que d'un magnétomètre, afin de limiter l'erreur liée à la dérive de l'estimation inertielle du cap, et de calibrer les bais des gyromètres de la centrale inertielle. La centrale inertielle fournit une référence du plan horizontal pour exploiter la composante horizontale du champ magnétique terrestre mesuré par le magnétomètre.

Dans une réalisation, le terminal utilisateur utilise un filtre pour restituer en temps réel une référence du plan horizontal, en dépit du mouvement de l'utilisateur.

Au premier ordre, la longueur de pas utilisée par le pédomètre peut être :
- soit un paramètre programmable correspondant à la longueur de pas moyen pour un piéton ou pour l'utilisateur identifié individuellement,
- soit estimée par étalonnage du pas moyen de l'utilisateur identifié individuellement.

A cet effet, dans une réalisation, le système comprend des moyens pour programmer la longueur de pas de référence de l'utilisateur. Dans une autre réalisation, le système comprenant des moyens pour, dans le cas où l'environnement comprend au moins deux points particuliers, réaliser un étalonnage de la longueur du pas de référence de l'utilisateur, cet étalonnage consistant à estimer la trajectoire de l'utilisateur entre les deux points particuliers, et à corréler cette estimation avec la distance connue entre les deux points particuliers.

La longueur de pas ainsi estimée est mémorisée au sein du terminal utilisateur et/ou dans le serveur. Lorsqu'un utilisateur se déplace, il ne réalise pas toujours des pas de la même longueur. Par exemple, s'il est fatigué, ou s'il est en train de converser, il aura tendance à faire des pas plus courts. Au contraire, s'il est pressé ou s'il marche sur un sol en descente, la longueur de ses pas se verra augmentée. Pour tenir compte de ces variations et obtenir des estimations les plus précises possibles, le système de localisation comprend, dans une réalisation, un dispositif améliorant l'estimée de longueur de chaque pas, par pondération du pas moyen estimé. Ce dispositif réalise une pondération variable en fonction de la signature inertielle, qui permet de classer le type de pas (marche normale, marche sur plan incliné, franchissement d'une marche d'escalier, course, recul) ainsi que son amplitude relative.

Le moyen d'étalonnage utilise les moyens précités pour estimer la trajectoire sur la base d'une hypothèse de pas moyen collectif ou individuel, et exploite un/tout déplacement délimité soit par deux bornes de positionnement, soit par deux points singuliers de l'environnement (intersection, sas, porte), soit une borne de positionnement et un point singulier, dont le franchissement est identifiable sans ambiguïté et avec une bonne précision compte tenu de la trajectoire estimée et de l'incertitude initiale du pas moyen de l'utilisateur par rapport au pas moyen paramétré. En effet, les extrémités du trajet étant identifiées, et la trajectoire réalisée étant estimée linéairement par rapport à la longueur de pas de référence, on détermine la longueur du pas de référence de sorte que les extrémités de la trajectoire estimée correspondent aux extrémités identifiées en absolu sur la carte.

Dans une réalisation, les moyens pour réaliser l'étalonnage sont intégrés dans le terminal utilisateur.

Dans une autre réalisation, le terminal comprend des moyens pour déléguer au serveur le calcul d'étalonnage.

Dans une réalisation, pour estimer la distance parcourue, le terminal comporte des moyens pour détecter la signature inertielle du mouvement réalisé par l'utilisateur, et des moyens pour pondérer l'estimation de distance en fonction du type de déplacement. Dans ce cas, il peut être utile que le serveur et/ou le terminal comporte(nt) une base de données associant à différents types de déplacement un coefficient de pondération de la longueur des pas de l'utilisateur. Ainsi, le terminal, ayant identifié le type de déplacement, peut corriger l'estimation de distance en utilisant le coefficient de pondération associé au déplacement de l'utilisateur.

Il a été vu précédemment que le terminal réalise une estimation du cap suivi, notamment à partir de capteurs inertiels. La précision de position et d'attitude ou de cap estimés à partir d'une centrale inertielle se dégrade et dérive avec le temps. La précision de l'estimation de la distance curviligne par pédomètre dépend de l'erreur sur le pas de référence effectif. En général, la précision d'estimation de position se dégrade avec le temps. Il est donc primordial de connaître la précision associée à une estimation de position.

Ainsi, dans une réalisation, le terminal utilisateur comprend des moyens pour associer une précision à chaque estimation de position. Cette précision est calculée par exemple à partir de paramètres enregistrés dans une base de données, compte tenu de :
- la précision de position après recalage en proximité d'une borne de position, et selon le type et l'emplacement de la borne
- la précision de position après recalage au franchissement d'un point singulier identifié de l'environnement, et selon le point singulier
- la loi de dégradation de la précision de position par le dispositif de navigation en aveugle.

Dans une réalisation, le terminal et/ou le serveur comporte (nt) une base de données comprenant : la dernière position estimée par chaque terminal, et sa précision associée et la dernière trajectoire estimée dans une profondeur de temps variable. Cette profondeur de temps est déterminée au préalable. On peut par exemple choisir que le serveur conserve les estimations de trajectoire réalisées au cours de l'heure précédente.

Parfois, la communication entre un terminal utilisateur et le serveur distant peut être interrompue, notamment à cause d'une panne au niveau du serveur.

Dans ce cas, il est utile que, dans une réalisation, le terminal utilisateur soit muni de moyens pour communiquer avec d'autres terminaux utilisateurs. En effet, ces moyens peuvent, par exemple, permettre à un terminal utilisateur de télécharger des cartographies depuis un autre terminal se trouvant à proximité. Ainsi, le terminal utilisateur peut continuer à réaliser des estimations de trajectoires et de positions en local, même sans communication avec le serveur.

Par ailleurs, le fait de pouvoir associer une précision à chaque estimation permet de comparer différentes estimations en terme de pertinence, afin de ne conserver que la meilleure.

Par exemple, dans une réalisation, le terminal comprend des moyens pour communiquer avec un second terminal utilisateur, détecter la proximité de ce second terminal et pour prendre en compte la dernière position estimée par ce second terminal, si celle-ci a une meilleure précision que la dernière position estimée du premier terminal. Ainsi, si deux terminaux se croisent, ils sont à un instant donné à la même position. Il peut donc être utile d'effectuer une comparaison entre les dernières estimations réalisées par chacun des terminaux, pour ne conserver que la meilleure, c'est-à-dire celle qui est la plus vraisemblable, et la plus précise. Le terminal prendra en compte cette nouvelle information de position, soit par un recalage direct de la position, soit dans le cadre d'un filtrage pondérant observations et état estimé. Dans une réalisation, le terminal utilise un filtre de Kalman pour fusionner les données. Un tel filtre peut également être utilisé pour réaliser l'estimation de la longueur du pas de référence, et le calcul des coefficients de pondération associés à chaque type de mouvement.

Pour affiner l'estimation de trajectoire réalisée par le serveur et/ou le terminal, et notamment pour limiter les dérives d'erreur résultant des différentes estimations, on peut utiliser une cartographie des contraintes de l'environnement dans lequel se trouve l'utilisateur, ces contraintes étant, par exemple, des seuils de portes, des murs, des escaliers ou encore des ascenseurs. On peut alors appliquer un algorithme de maximum de vraisemblance comparant cette cartographie avec la trajectoire du piéton estimée en aveugle. En effet, certaines trajectoires absurdes telles que des trajectoires traversant des obstacles, par exemple des murs, pourront ainsi être supprimées de l'ensemble des trajectoires possibles.

A cet effet, dans une réalisation, le serveur dispose de moyens pour mémoriser une cartographie générale de la zone de couverture. En revanche, le terminal utilisateur disposant d'une moindre capacité mémoire, il ne peut pas stocker une telle carte. Pour pouvoir toutefois affiner ses estimations de trajectoire, le terminal comporte, dans une réalisation, des moyens pour télécharger depuis le serveur une cartographie locale simplifiée de la zone dans laquelle il se trouve. En effet, une telle cartographie est suffisante puisqu'il n'est pas nécessaire, pour le terminal, de disposer de cartographies représentant, par exemple, d'autres bâtiments.

Pour pouvoir conserver cette cartographie téléchargée depuis le serveur, le terminal dispose d'une mémoire. Par ailleurs, le terminal peut, dans une réalisation, comporter des moyens pour conserver en mémoire la dernière cartographie téléchargée depuis le serveur et/ou la cartographie téléchargée le plus fréquemment. En effet, il peut parfois arriver que la liaison avec le serveur distant soit interrompue. Dans ce cas, il est nécessaire que le terminal puisse, malgré tout, avoir accès à une carte. Le choix de la carte conservée en mémoire peut se faire par exemple au moment de la configuration du serveur et/ou du terminal.

Le terminal et/ou le serveur dispose(nt) en outre de moyens pour corréler, à l'aide d'un algorithme de maximum vraisemblance, l'estimation de trajectoire avec une cartographie de la zone de couverture, et ainsi affiner l'estimation de trajectoire.

Cette méthode par corrélation avec une cartographie, appelée « map matching », permet d'affiner la précision de l'estimation de position compte tenu de la diversité des informations traitées. Plus l'utilisateur se déplace, plus le champ des trajectoires possibles se réduit.

Dans une réalisation, le serveur peut archiver les dernières positions utilisateur avec l'instant de mesure, la précision et la vraisemblance associés, pour le dernier recalage (passage d'une borne ou d'un point singulier identifié) et/ou la position estimée lors de la dernière communication du terminal vers le serveur.

Enfin, un autre moyen pour affiner l'estimation de position de l'utilisateur est de prévoir, dans une réalisation, que le terminal comporte un capteur pour mesurer la pression atmosphérique. En effet, la pression variant avec l'altitude, l'utilisation d'un baromètre permet de détecter si l'utilisateur monte ou descend, et d'estimer son déplacement vertical relatif. Ces informations, couplées avec celles donnant, à partir d'une carte, les positions d'escaliers ou d'ascenseurs dans un bâtiment ou en extérieur, permettent de connaître mieux encore le déplacement effectué par un utilisateur.

Dans une réalisation, le terminal comporte une centrale inertielle pour fournir une référence horizontale à un magnétomètre qui réalise la mesure de la composante horizontale du champ magnétique terrestre.

Afin de détecter au mieux les mouvements, le système comprend, dans une réalisation, un module fixe par rapport à l'utilisateur, ce module étant destiné à contenir un ou plusieurs capteur(s) inertiel(s).

Ceci permet aux capteurs de détecter uniquement le mouvement global de l'utilisateur, et non des mouvements parasites tels que les mouvements de ses mains lors des manipulations du terminal. Le module fixe est alors muni de moyens de traitement et d'archivage d'informations, et de moyens pour transmettre des informations au terminal utilisateur.

Toutefois, il peut être gênant pour l'utilisateur de devoir supporter différents dispositifs sur lui. Ainsi, dans une autre réalisation, les capteurs inertiels sont intégrés dans le terminal utilisateur.

Afin que le système de localisation décrit ici soit utilisable, il est nécessaire que les utilisateurs portent en permanence un terminal sur eux ou à proximité immédiate. Une solution simple permettant de s'assurer de cela est d'intégrer le terminal utilisateur dans un objet ou un appareil que les utilisateurs ont déjà l'habitude de transporter avec eux. Ainsi, dans une réalisation, le terminal utilisateur est intégré dans un appareil électronique de type téléphone mobile ou assistant personnel communicant.

Dans ces deux réalisations, si des capteurs inertiels sont intégrés dans le terminal, par exemple dans un téléphone, ils auront un mouvement relatif par rapport à l'utilisateur. Ceci peut fausser l'estimation de changement de direction de l'utilisateur, par exemple si l'utilisateur reçoit un appel et porte le téléphone à son oreille droite, puis en cours de déplacement le porte à son oreille gauche. Pour remédier à cela, on peut établir une base de données contenant les signatures inertielles des déplacements aboutissant à différentes positions. En effet, on a constaté que le nombre de positions stables de l'appareil par rapport au porteur est très limité (à l'oreille droite ou gauche, à la main droite ou gauche devant soi, dans la poche droite ou gauche avec une oreillette). On effectue donc, lors de la première utilisation, un étalonnage des habitudes de l'utilisateur, afin de définir les signatures inertielles des mouvements conduisant à chacune des positions. Ainsi, lorsque le terminal détectera l'une des ces signatures, il sera en mesure d'apporter la compensation nécessaire lui permettant d'estimer le cap suivi par l'utilisateur sans que le déplacement du terminal ne perturbe le processus de localisation.

Par ailleurs, les appareils tels que des téléphones mobiles présentent l'avantage supplémentaire de disposer de leurs propres moyens de communication avec un serveur, moyens qui peuvent donc être utilisés par un système selon l'invention. Ainsi, dans une réalisation, le terminal et le serveur échangent des informations par l'intermédiaire d'un réseau de communication cellulaire. Par exemple, les échanges entre les terminaux et le serveur se font de la même manière que les appels téléphoniques passés depuis un téléphone mobile, sans nécessiter le déploiement de moyens de communication complémentaires.

Dans une réalisation, le système comprend des moyens pour communiquer en vue d'une hybridation avec un récepteur de localisation par satellite, de type GNSS. En fait, on peut réaliser une hybridation entre ces deux systèmes complémentaires. Dans cette configuration, le système défini selon l'invention échange des informations avec un récepteur GNSS pour améliorer la précision et l'intégrité de position, et prendre le relais de ce dernier lorsqu'il ne peut plus fonctionner. Ainsi, lorsqu'un utilisateur, localisé par un système de type GNSS, entre dans un bâtiment, un système de localisation installé dans le bâtiment pourra recueillir des informations sur l'utilisateur afin de continuer la localisation, même si l'acquisition des signaux satellites est compromise dans le bâtiment.

L'invention concerne également un terminal utilisateur et un serveur destinés à être utilisés dans un système conforme à l'invention.

D'autres caractéristiques et avantages de l'invention apparaîtront avec la description non limitative de certains de ses modes de réalisation, cette description étant effectuée à l'aide des figures sur lesquelles :
- la figure 1 représente un bâtiment dans lequel s'effectue de la localisation d'utilisateur à l'aide d'un système conforme à l'invention, et
- la figure 2 représente les différents moyens dont sont munis un terminal et un serveur conformes à l'invention.

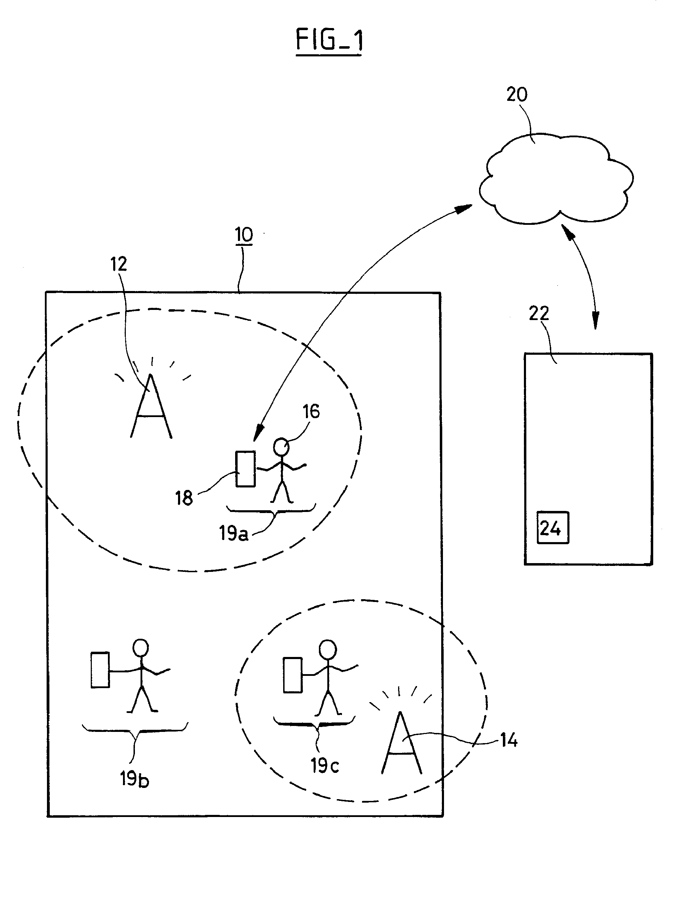

La figure 1 représente un bâtiment 10 équipé de façon à ce que des utilisateurs piétons se déplaçant à l'intérieur de ce bâtiment puissent être localisés par un système conforme à l'invention.

Pour cela, le bâtiment est muni de deux bornes de positionnement 12 et 14 émettant chacune un signal permettant la détection de leur proximité par un terminal utilisateur. Lorsqu'un utilisateur 16 muni d'un terminal utilisateur 18 passe à proximité de la borne de positionnement 12 (position 19a) , c'est-à-dire dans une zone d'un rayon de l'ordre du mètre, le terminal 18 détecte le signal émis par cette borne.

Le terminal transmet alors dès que possible à un serveur distant 22, par l'intermédiaire d'un réseau de communication 20, une information indiquant sa position, l'instant, la précision et la vraisemblance associés en fonction du signal qu'il a détecté. Le serveur 22 enregistre, dans une mémoire 24, ces informations en tant que position sûre de l'utilisateur.

Lors d'un déplacement, l'utilisateur peut se trouver dans une position 19b dans laquelle son terminal ne détecte aucun signal émis par une borne de positionnement. Dans ce cas, le terminal utilisateur réalise une estimation de position en fonction de la trajectoire estimée en aveugle et réalisée par rapport à la borne 12, et communique cette estimation au serveur 22. Le serveur enregistre dans sa mémoire 24 cette dernière estimation de position, en complément de la dernière position sûre enregistrée.

Dès que l'utilisateur atteint une position 19c située à moins de 1 mètre de la borne de positionnement 14, la proximité de la borne est détectée à partir de son signal. Comme précédemment, le terminal envoie alors une information au serveur 22 signalant la détection de la borne 14. Le serveur 22 remplace alors, dans sa mémoire 24, la position de la borne 12 par la position de la borne 14 en tant que dernière position sûre.

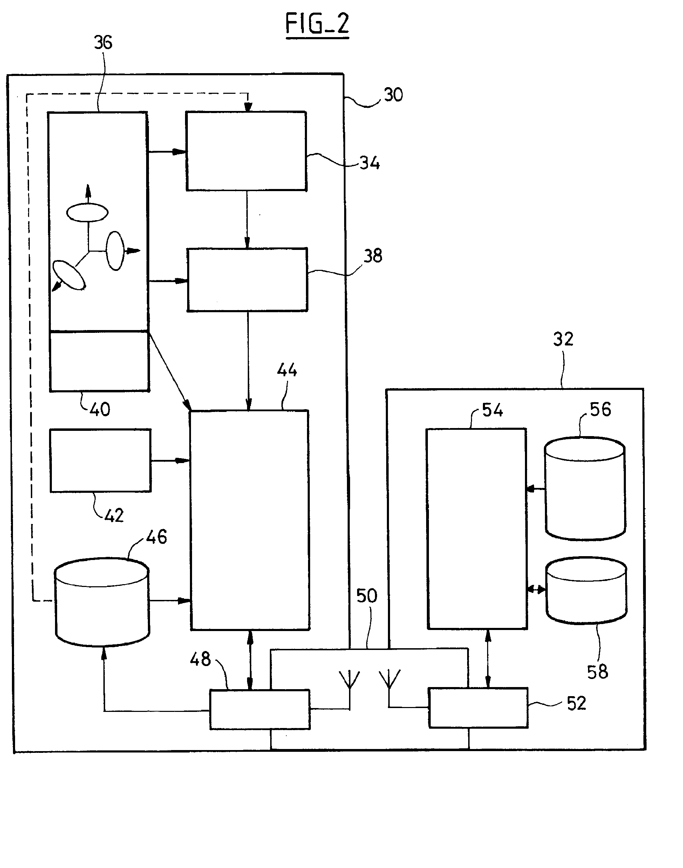

La figure 2 montre de manière plus détaillée les moyens dont sont munis un terminal 30 porté par un utilisateur et un serveur 32 d'un système selon l'invention, moyens utilisés pour réaliser les estimations de trajectoire et de position de l'utilisateur.

Le terminal 30 représenté est muni d'un pédomètre 34 pour estimer la distance parcourue par l'utilisateur. Pour cela, le pédomètre 34 conserve en mémoire une longueur de pas de référence de l'utilisateur. Cette longueur de pas est entrée par l'utilisateur ou calculée lors d'un étalonnage, tel qu'expliqué précédemment. Pour estimer la distance parcourue, c'est-à-dire le déplacement curviligne de l'utilisateur, le pédomètre multiplie le nombre de pas réalisés par l'utilisateur par la longueur de référence, après avoir pondéré cette longueur en fonction du mouvement de l'utilisateur. Le mouvement de l'utilisateur est caractérisé par sa signature inertielle détectée par des capteurs inertiels 36. La précision curviligne de ce pédomètre est généralement de l'ordre de 2% à 5% de la distance parcourue.

Les capteurs inertiels 36 permettent également d'estimer les changements de direction de l'utilisateur dans le plan horizontal. A partir de cette mesure et du déplacement curviligne déterminé par le pédomètre 34, le terminal peut effectuer une estimation du déplacement cartésien de l'utilisateur (38), c'est-à-dire une estimation de sa trajectoire. Les capteurs inertiels 36 peuvent être hybridés au magnétomètre 40 pour améliorer l'estimation du cap suivi.

Le terminal est également muni de moyens 42 de détection des bornes de positionnement, ce qui permet au moyen 44 de réaliser une estimation de la position de l'utilisateur. D'autre part, les moyens 44 permettent également d'affiner cette estimation en utilisant divers paramètres. Les premiers paramètres pris en compte sont la pression atmosphérique et le champ magnétique, mesurés par un baromètre et un magnétomètre (40). Ces deux appareils permettent respectivement de connaître l'étage auquel se trouve l'utilisateur, et d'améliorer l'estimation du cap suivi.

Par ailleurs, les moyens 44 utilisent une cartographie locale 46, stockée dans le terminal, pour effectuer un raffinement de l'estimation. Pour cela, les moyens 44 utilisent un algorithme de maximum de vraisemblance entre les cartes et les trajectoires estimées. Pour télécharger la cartographie, et transmettre des informations au serveur 32, le terminal dispose de moyens de transmission 48, permettant de communiquer avec un réseau de communication 50. De son côté, le serveur 32 dispose également de moyens de transmission 52.

La cartographie locale 46 dont dispose le terminal est en fait un extrait dérivé d'une cartographie globale de la zone de couverture, cette cartographie globale étant stockée dans une mémoire 56 du serveur 32. Le serveur 32 stocke également, dans une autre mémoire 58, les positions 58 des différents utilisateurs. Ces positions peuvent avoir été communiquées par différents terminaux utilisateurs, ou alors directement calculées par le serveur lui-même. En effet, le serveur dispose de moyens 54 lui permettant de réaliser différents calculs. Ainsi, le terminal utilisateur 30 peut déléguer, via le réseau de communication 50, certains calculs, tels que les calculs de maximum de vraisemblance, au serveur 32. Dans ce cas, le serveur 32 calcule des estimations de trajectoire et/ou de position qu'il transmet au terminal 30. Le serveur 32 dispose d'une puissance de calcul et d'une capacité de mémoire suffisante pour traiter simultanément les requêtes de plusieurs utilisateurs.

## Revendications

1. Système de localisation d'utilisateur(s) piéton(s) (16) se déplaçant dans une zone de couverture définie au préalable (10), la zone de couverture (10) comportant des points de repère physiques de position connue (12, 14), et le système comprenant :
- au moins un terminal (18 ; 30), destiné à être porté par 1(es) utilisateur(s) piéton(s) (16), comportant des capteurs (36) pour mesurer des paramètres afférents aux déplacements de l'utilisateur (16),
- des moyens (44) pour réaliser une estimation de position de l'utilisateur (16) à partir des points de repère physiques (12,14) et des mesures réalisées par les capteurs (34, 36), cette estimation étant utilisée sans faire appel à la détection de signaux émis par un satellite, et
- au moins un serveur distant (22 ; 32) comprenant des moyens (24 ; 56) pour répertorier les points de repère physiques.

2. Système selon la revendication 1 comportant une pluralité de bornes de positionnement (12 ; 14) installées sur la zone de couverture (10), représentant des points de repères physiques.

3. Système selon la revendication 2 dans lequel chaque borne de positionnement (12 ; 14) émet un signal caractéristique de son identité et/ou de sa proximité ou distance.

4. Système selon la revendication 2 ou 3 dans lequel le terminal comporte des moyens (42) pour détecter la proximité immédiate d'une borne, ou la distance à une borne, et ainsi identifier une position sûre de l'utilisateur et/ou une position candidate avec une probabilité déterminée.

5. Système selon la revendication 4 dans lequel le terminal comporte des moyens (48) pour transmettre cette position sûre et/ou probable à un serveur distant (22 ; 32).

6. Système selon l'une des revendications précédentes dans lequel le terminal et/ou le serveur comporte(nt) des moyens (44) pour identifier les points de repère physiques à partir d'une cartographie de la zone de couverture.

7. Système selon la revendication 6 dans lequel le terminal et/ou le serveur comporte(nt) des moyens de présomption de passage à proximité d'un point de repère physique (12, 14) de la zone de couverture (10), notamment des moyens de corrélation avec une cartographie de l'environnement.

8. Système selon l'une des revendications précédentes dans lequel le terminal et/ou le serveur comprennent des moyens pour mémoriser une longueur de pas de référence de l'utilisateur.

9. Système selon la revendication 8 dans lequel les capteurs intégrés dans le terminal comprennent des capteurs, notamment de type capteurs inertiels, pour détecter les pas et pour mesurer les changements de direction de l'utilisateur, le terminal comportant en outre :
- des moyens pour estimer la distance parcourue à partir du nombre de pas et de la longueur de pas de référence de l'utilisateur, notamment un pédomètre,
- des moyens pour estimer le cap suivi, à partir des changements de direction mesurés,
- et des moyens pour convertir les estimations réalisées par ces deux moyens en estimation de trajectoire.

10. Système selon la revendication 8 ou 9 comprenant des moyens pour programmer la longueur de pas de référence de l'utilisateur.

11. Système selon l'une des revendications 8 à 10 comprenant des moyens pour, dans le cas où l'environnement comprend au moins deux points particuliers, réaliser un étalonnage de la longueur du pas de référence de l'utilisateur, cet étalonnage consistant à estimer la trajectoire de l'utilisateur entre les deux points particuliers, et à corréler cette estimation avec la distance connue entre les deux points particuliers.

12. Système selon la revendication 11 dans lequel les moyens pour étalonner sont intégrés dans le terminal utilisateur.

13. Système selon la revendication 12 dans lequel le terminal comprend des moyens pour déléguer au serveur le calcul d'étalonnage.

14. Système selon l'une des revendications 8 à 13 dans lequel, pour estimer la distance parcourue, le terminal comporte des moyens pour détecter la signature inertielle du mouvement réalisé par l'utilisateur, et des moyens pour pondérer l'estimation de distance en fonction du type de déplacement.

15. Système selon l'une des revendications précédentes dans lequel le terminal comprend des moyens pour associer une précision à chaque estimation de position.

16. Système selon la revendication 15 dans lequel le terminal et/ou le serveur comporte(nt) une base de données (58) comprenant : la dernière position estimée par chaque terminal, et sa précision associée et la trajectoire estimée sur une profondeur de temps variable.

17. Système selon la revendication 16 dans lequel le terminal comprend des moyens pour communiquer avec un second terminal, pour détecter la proximité de ce second terminal, et pour prendre en compte la dernière position estimée par ce second terminal, si celle-ci a une meilleure précision que la dernière position estimée du premier terminal.

18. Système selon l'une des revendications précédentes dans lequel le serveur dispose de moyens (56) pour mémoriser une cartographie générale de la zone de couverture.

19. Système selon la revendication 18 dans lequel le terminal dispose de moyens pour télécharger, à partir du serveur, une cartographie locale simplifiée (46) de la zone où il se trouve.

20. Système selon la revendication 18 ou 19 dans lequel le terminal et/ou le serveur dispose(nt) de moyens pour corréler, à l'aide d'un algorithme de maximum de vraisemblance, l'estimation de trajectoire en aveugle avec une cartographie (46 ; 56) de la zone de couverture, et ainsi affiner cette estimation de trajectoire.

21. Système selon l'une des revendications précédentes dans lequel le terminal comporte une centrale inertielle pour fournir une référence horizontale à un magnétomètre qui réalise la mesure de la composante horizontale du champ magnétique terrestre.

22. Système selon l'une des revendications précédentes dans lequel le terminal comporte un capteur (40) pour mesurer la pression atmosphérique.

23. Système selon l'une des revendications précédentes comprenant un module fixe par rapport à l'utilisateur, ce module étant destiné à contenir un ou plusieurs capteur(s) inertiel(s).

24. Système selon l'une des revendications précédentes dans lequel le terminal utilisateur est intégré dans un appareil électronique de type téléphone mobile et/ou assistant personnel communicant.

25. Système selon l'une des revendications précédentes dans lequel le terminal et/ou serveur dispose(nt) d'une base de données contenant les signatures inertielles des déplacements aboutissant à différentes positions possibles du terminal utilisateur par rapport à l'utilisateur.

26. Système selon l'une des revendications précédentes, comprenant des moyens pour communiquer en vue d'une hybridation avec un récepteur de localisation par satellite, notamment de type GNSS.

27. Terminal destiné à être utilisé dans un système conforme à l'une des revendications 1 à 26.

28. Serveur destiné à être utilisé dans un système conforme à l'une des revendications 1 à 26.
